(19) Europäisches Patentamt
European Patent Office
Office européen des brevets

(11) Veröffentlichungsnummer: **0 000 345**
**B1**

(12) **EUROPÄISCHE PATENTSCHRIFT**

(45) Veröffentlichungstag der Patentschrift: **01.04.81**

(51) Int. Cl.³: **C 07 C 69/74,** C 07 C 121/75, C 07 C 149/40, A 01 N 53/00

(21) Anmeldenummer: **78100252.2**

(22) Anmeldetag: **28.06.78**

(54) **Substituierte Phenoxybenzyloxycarbonylderivate, Verfahren zu deren Herstellung und deren Verwendung als Insektizide und Akarizide.**

(30) Priorität: **06.07.77 DE 2730515**

(43) Veröffentlichungstag der Anmeldung: **24.01.79 Patentblatt 79/2**

(45) Bekanntmachung des Hinweises auf die Patenterteilung: **01.04.81 Patentblatt 81/13**

(84) Benannte Vertragsstaaten: **BE CH DE FR GB NL SE**

(56) Entgegenhaltungen:
**FR-A-2 067 854**
**FR-A-2 362 588**
**GB-A-1 207 371**
**NL-A-77 01321**
**CHEMICAL ABSTRACTS, 1978, Vol. 88, p74106c, Columbus, Ohio, Japan Kokai 77 116 440 "Cyclopropane-carboxylate esters", 29. September 1977**
**INTERNATIONAL JOURNAL OF METHODS IN SYNTHETIC ORGANIC CHEMISTRY, 1975, p283, Nr. 4363, Stuttgart, Vinylcyclopropanes**

(73) Patentinhaber: **BAYER AG, Zentralbereich Patente, Marken und Lizenzen, D-5090 Leverkusen 1, Bayerwerk (DE)**

(72) Erfinder: **Fuchs, Rainer, Dr., Roeberstrasse 8, D-5600 Wuppertal 1 (DE)**
Erfinder: **Hammann, Ingeborg, Dr., Belfortstrasse 9, D-5000 Köln 1 (DE)**
Erfinder: **Stendel, Wilhelm, Dr., In den Birken 55, D-5600 Wuppertal 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchgebühr entrichtet worden ist (Art. 99(1) Europäisches Patentübereinkommen).

EP 0 000 345 B1

# Substituierte Phenoxybenzyloxycarbonylderivate, Verfahren zu deren Herstellung und deren Verwendung als Insektizide und Akarizide

Die vorliegende Erfindung betrifft neue substituierte Phenoxybenzyloxycarbonylderivate, mehrere Verfahren zu ihrer Herstellung und ihre Verwendung als Insetkizide und Akarizide.

Es ist bereits bekannt, dass Phenoxybenzylacetate oder -carboxylate, wie z.B. 3'-Phenoxybenzyl-α-isopropyl-(3,4-dimethoxy-phenyl)-acetat, (6-Chlor-piperonyl)-2,2-dimethyl-3-(2,2-dimethyl-vinyl)-cyclopropancarboxylat und 3'-Phenoxy-benzyl-2,2-dimethyl-3-indenyl-cyclopropancarboxylat insektizide und akarizide Eigenschaften haben (vergleiche Deutsche Offenlegungsschriften 2 335 347 und 2 605 828 und USA-Patent 2 857 309).

Es wurden nun die neuen substituierten Phenoxybenzyloxycarbonylderivate der Formel (I)

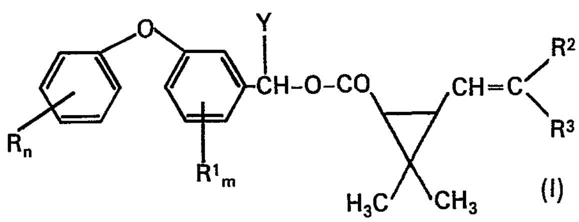

(I)

gefunden,
in welcher
R, $R^1$ und $R^2$ gleich oder verschieden sein können und für Wasserstoff oder Halogen stehen,
$R^3$ für Phenyl oder Phenylthio steht, wobei die Phenylringe gegebenenfalls ein- oder mehrfach, gleich oder verschieden durch Alkyl oder Halogen substituiert sein können,
Y für Wasserstoff oder Nitril steht,
n für eine ganze Zahl von 1 bis 5 steht und
m für eine ganze Zahl von 1 bis 4 steht.

Diese neuen Verbindungen zeichnen sich durch starke insektizide und akarizide Eigenschaften aus.

Die allgemeine Formel (I) schliesst dabei die verschiedenen möglichen Steroisomeren, die optischen Isomeren und Mischungen dieser Komponenten ein.

Weiterhin wurde gefunden, dass die substituierten Phenoxybenzyloxycarbonylderivate (I) erhalten werden, wenn man

a) Phenoxybenzylalkohole der Formel (II)

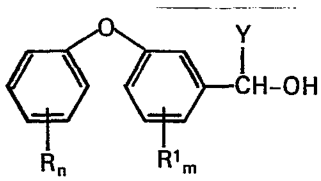

(II)

in welcher
R, $R^1$, Y, n und m die oben angegebene Bedeutung haben,
mit Cyclopropancarbonsäurederivaten der Formel

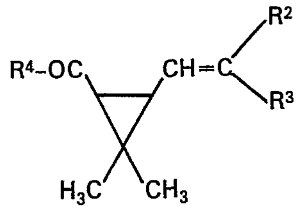

(III)

in welcher
$R^2$ und $R^3$ die oben angegebene Bedeutung haben, und
$R^4$ für Halogen oder $C_{1-4}$-Alkoxy, vorzugsweise Methoxy oder Äthyoxy steht,
Hal für Halogen, vorzugsweise Chlor, steht,
gegebenenfalls in Gegenwart eines Säureakzeptors und gegebenenfalls in Gegenwart eines Lösungsmittels umsetzt oder

b) Phenoxybenzylhalogenide der Formel

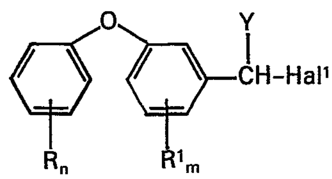

(IV)

in welcher
R, $R^1$, Y, n und m die oben angegebene Bedeutung haben und
Hal für Halogen, vorzugsweise Chlor oder Brom, steht, mit Cyclopropancarbonsäurederivaten der Formel

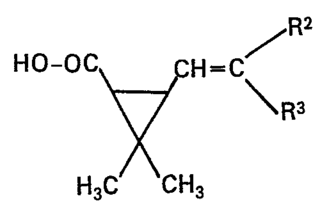

(V)

in welcher
$R^2$ und $R^3$ die oben angegebene Bedeutung haben,
gegebenenfalls in Form der Alkali-, Erdalkali- oder Ammoniumsalze oder gegebenenfalls in Gegenwart eines Säureakzeptors und gegebenenfalls in Gegenwart eines Lösungsmittels umsetzt.

Überraschenderweise zeigen die erfindungsgemässen substituierten Phenoxybenzyloxycarbonylderivate eine bessere insektizide und akarizide Wirkung als die entsprechenden vorbekannten Produkte analoger Konstitution und gleicher Wirkungsrichtung. Die Produkte gemäss vorliegender Erfindung stellen somit eine echte Bereicherung der Technik dar.

Verwendet man beispielsweise bei Verfahrensvariante a) 3-(4-Fluorphenoxy)-benzylalkohol und 2,2-Dimethyl-3-(2-phenylvinyl)-cyclopropancarbonsäurechlorid und bei Verfahrensvariante b)

das Natriumsalz der 2,2-Dimethyl-3-(2-phenylthiovinyl)-cyclopropancarbonsäure und 3-Phenoxy-α-cyan-benzylbromid als Ausgangsmaterialien, so kann der Reaktionsverlauf durch die folgenden Formelschemata wiedergegeben werden:

a)

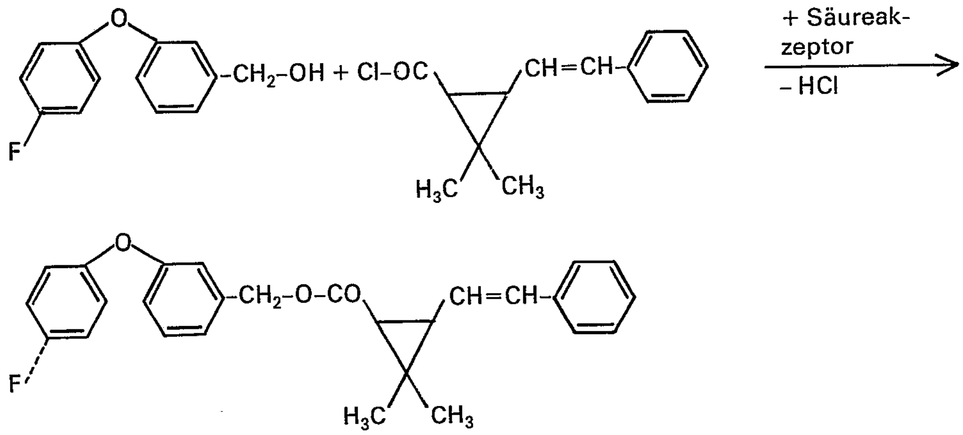


b)

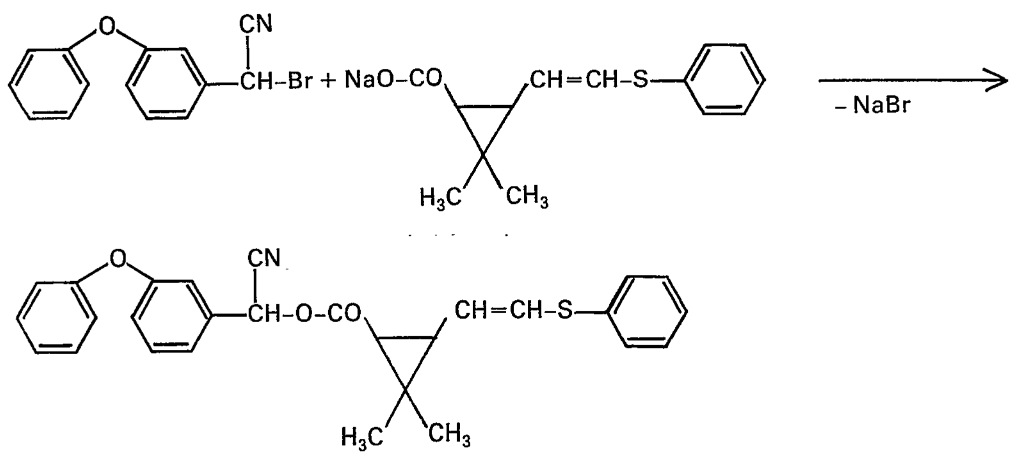


Die zuverwendenden Ausgangsstoffe sind durch die Formeln (I) bis (V) eindeutig allgemein definiert. Vorzugsweise stehen darin jedoch
R und $R^1$ für Wasserstoff oder Fluor,
$R^2$ für Wasserstoff, Chlor oder Brom,
$R^3$ für Phenyl, Phenylthio, Halogenphenyl, wobei Halogen insbesondere Chlor oder Fluor ist, oder Alkylphenyl, wobei der Alkylrest 1 bis 6, insbesondere 1 bis 4, Kohlenstoffatome hat,
$R^4$ für Chlor oder Methoxy,
Y für Wasserstoff oder Nitril,
n für eine ganze Zahl von 1 bis 5 und
m für eine ganze Zahl von 1 bis 4.

Die als Ausgangsverbindungen zu verwendenden Phenoxybenzylalkohole (II) sind grösstenteils bekannt oder nach allgemein üblichen, in der Literatur beschriebenen Verfahren herstellbar (vergleiche Deutsche Offenlegungsschrift 2547534).

Als Beispiele dafür seien im einzelnen genannt:
3-Phenoxy-benzylalkohol
3-(4-Fluorphenoxy)-benzylalkohol
3-(3-Fluorphenoxy)-benzylalkohol
3-(2-Fluorphenoxy)-benzylalkohol
3-Phenoxy-4-fluor-benzylalkohol
3-(4-Fluorphenoxy)-4-fluor-benzylalkohol
3-(3-Fluorphenoxy)-4-fluor-benzylalkohol
3-(2-Fluorphenoxy)-4-fluor-benzylalkohol
3-Phenoxy-α-cyan-benzylalkohol
3-(4-Fluorphenoxy)-α-cyan-benzylalkohol
3-(3-Fluorphenoxy)-α-cyan-benzylalkohol
3-(2-Fluorphenoxy)-α-cyan-benzylalkohol
3-Phenoxy-4-fluor-α-cyan-benzylalkohol
3-(4-Fluorphenoxy)-4-fluor-α-cyan-benzylalkohol
3-(3-Fluorphenoxy)-4-fluor-α-cyan-benzylalkohol
3-(2-Fluorphenoxy)-4-fluor-α-cyan-benzylalkohol
3-Phenoxy-6-fluor-α-cyan-benzylalkohol
3-(4-Fluorphenoxy)-6-fluor-α-cyan-benzylalkohol
3-(4-Fluorphenoxy)-6-fluor-α-cyan-benzylalkohol
3-(3-Fluorphenoxy)-6-fluor-α-cyan-benzylalkohol

Die weiterhin als Ausgangsverbindungen zu verwendenden Cyclopropancarbonsäurederivate (V) können nach literaturbekannten Verfahren aus den teilweise bekannten Cyclopropancarbonsäureäthylestern (vergleiche Tetrahedron Letters 1976, 48, S. 4359–4362) durch saure oder alkalische Verseifung hergestellt werden. Die freien Säuren werden nach bekannten Verfahren in die entsprechenden Salze oder Säurehalogenide (III) und (V) übergeführt. Die teilweise bekannten Äthylester können wiederum nach literaturbekannten Verfahren z.B. aus 2,2-Dimethyl-3-formylcyclopropancarbonsäureäthylester und 0,0-Diäthylmethanphosphonsäurediesterderivaten nach folgendem Formelschema hergestellt werden:

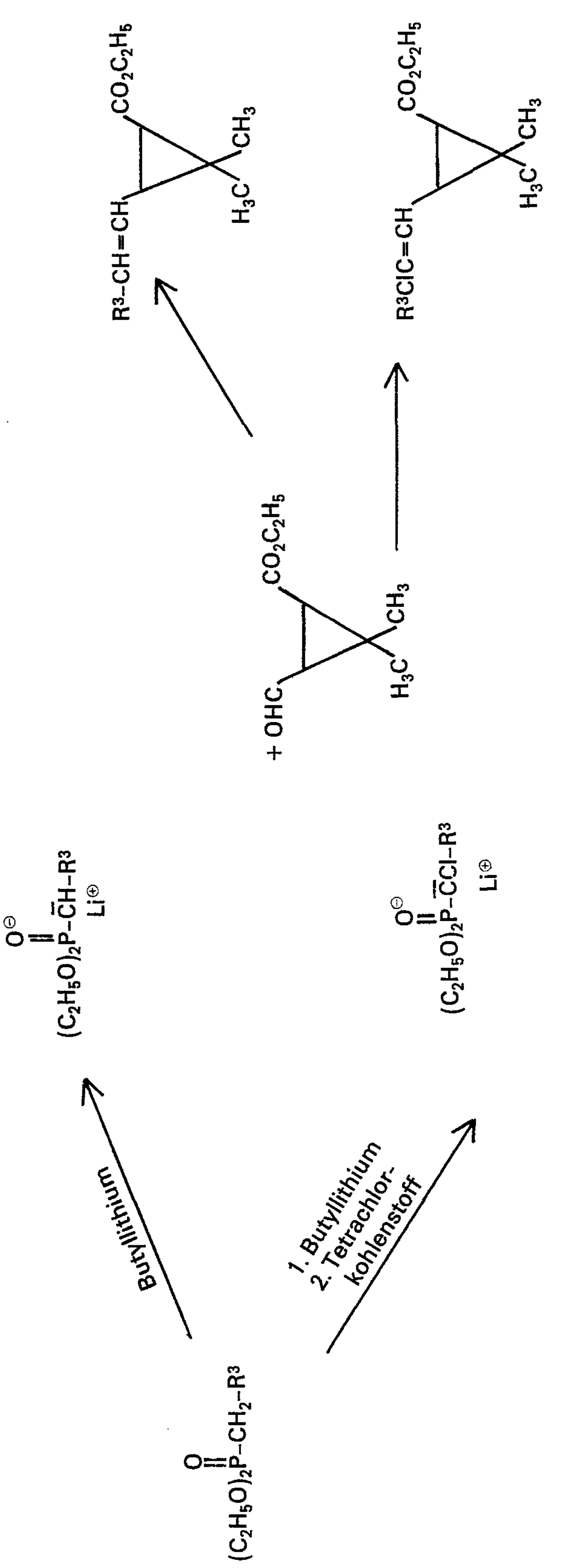


Als Beispiele für die Cyclopropancarbonsäurederivate (III) und (V) seien im einzelnen genannt:

3-[2-Phenyl-vinyl]-, 3-[2-(2-Chlorphenyl)-vinyl]-, 3-[2-(4-Chlorphenyl)-vinyl]-, 3-[2-(3,4-Dichlorphenyl)-vinyl]-,3-[2-(4-Fluorphenyl)-vinyl]-, 3-[2-Pentachlorphenyl-vinyl]-, 3-[2-Pentafluorphenyl-vinyl]-, 3-[2-Phenylthio-vinyl]-, 3-[2-(2-Chlorphenylthio)-vinyl]-, 3-[2-(4-Chlorphenylthio)-vinyl]-, 3-[2-(3,4-Dichlorphenylthio)-vinyl]-, 3-[2-(4-Fluorphenylthio)-vinyl]-, 3-[2-Pentachlorphenyl-thio-vinyl]-, 3-[2-Pentafluorphenylthio-vinyl]-, 3-[2-(4-tert.-Butylphenyl)-vinyl]-2,2-dimethylcyclopropancarbonsäure bzw. -2,2-dimethylcyclopropancarbonsäurechlorid, ferner

3-[2-Phenyl-2-chlor-vinyl]-, 3-[2-(2-Chlorphenyl)-2-chlor-vinyl]-, 3-[2-(4-Chlorphenyl)-2-chlor-vinyl]-, 3-[2-(3,4-Dichlorphenyl)-2-chlor-vinyl]-, 3-[2-(4-Fluorphenyl)-2-chlorvinyl]-, 3-(2-Pentachlorphenyl)-2-chlor-vinyl)-, 3-(2-Pentafluorphenyl-2-chlor-vinyl)-, 3-[2-Phenylthio-2-chlor-vinyl]-, 3-[2-(2-Chlorphenylthio)-2-chlor-vinyl]-, 3-[2-(4-Chlorphenylthio)-2-chlor-vinyl]-, 3-[2-(3,4-Dichlorphenylthio)-2-chlor-vinyl]-, 3-[2-(4-Fluorphenylthio)-2-chlor-vinyl]-, 3-[2-Pentachlorphenyl-thio-2-chlor-vinyl]-, 3-[2-Pentafluorphenylthio-2-chlor-vinyl]-, 3-[2-(4-tert.-Butylphenyl)-2-chlor-vinyl]-2,2-dimethylcyclopropancarbonsäure bzw. -2,2-dimethylcyclopropancarbonsäurechlorid, ferner

3-[2-Phenyl-2-brom-vinyl]-, 3-[2-(2-Chlorphenyl)-2-brom-vinyl]-, 3-[2-(4-Chlorphenyl)-2-brom-vinyl]-, 3-[2-(3,4-Dichlorphenyl)-2-brom-vinyl]-, 3-[2-(4-Fluorphenyl)-2-brom-vinyl]-, 3-[2-Pentachlorphenyl-2-brom-vinyl]-, 3-(2-Pentafluorphenyl-2-brom-vinyl)-, 3-[2-Phenylthio-2-brom-vinyl]-, 3-[2-(2-Chlorphenylthio)-2-brom-vinyl]-, 3-[2-(4-Chlorphenylthio)-2-brom-vinyl]-, 3-[2-(3,4-Dichlorphenylthio)-2-bromvinyl]-, 3-[2-(4-Fluorphenylthio)-2-brom-vinyl]-, 3-[2-Pentachlorphenylthio-2-brom-vinyl]-, 3-[2-Pentafluorphenylthio-2-brom-vinyl]-, 3-[2-(4-tert.-Butylphenyl)-2-brom-vinyl]-2,2-dimethylcyclopropancarbonsäure bzw. -2,2-dimethylcyclopropancarbonsäurechlorid.

Ausserdem werden die Phenoxybenzylhalogenide (IV) als Ausgangsverbindungen verwendet, die ebenfalls nach literaturbekannten Verfahren herzustellen sind. Als Beispiele dafür seien im einzelnen genannt:

3-Phenoxy-benzylchlorid bzw. -benzylbromid
3-(4-Fluorphenoxy)-benzylchlorid bzw. -benzylbromid
3-(3-Fluorphenoxy)-benzylchlorid bzw. -benzylbromid
3-(2-Fluorphenoxy)-benzylchlorid bzw. -benzylbromid
3-Phenoxy-4-fluor-benzylchlorid bzw. -benzylbromid
3-(4-Fluorphenoxy)-4-fluor-benzylchlorid bzw. -benzylbromid
3-(3-Fluorphenoxy)-4-fluor-benzylchlorid bzw. -benzylbromid
3-(2-Fluorphenoxy)-4-fluor-benzylchlorid bzw. -benzylbromid

3-Phenoxy-α-cyan-benzylchlorid bzw. -benzylbromid
3-(4-Fluorphenoxy)-α-cyan-benzylchlorid bzw. -benzylbromid
3-(3-Fluorphenoxy)-α-cyan-benzylchlorid bzw. -benzylbromid
3-(2-Fluorphenoxy)-α-cyan-benzylchlorid bzw. -benzylbromid
3-Phenoxy-4-fluor-α-cyan-benzylchlorid bzw. -benzylbromid
3-(4-Fluorphenoxy)-4-fluor-α-cyan-benzylchlorid bzw. -benzylbromid
3-(3-Fluorphenoxy)-4-fluor-α-cyan-benzylchlorid bzw. -benzylbromid
3-(2-Fluorphenoxy)-4-fluor-α-cyan-benzylchlorid bzw. -benzylbromid
3-Phenoxy-6-fluor-α-cyan-benzylchlorid bzw. -benzylbromid
3-(4-Fluorphenoxy)-6-fluor-α-cyan-benzylchlorid bzw. -benzylbromid
3-(3-Fluorphenoxy)-6-fluor-α-cyan-benzylchlorid bzw. -benzylbromid
3-(2-Fluorphenoxy)-6-fluor-α-cyan-benzylchlorid bzw. -benzylbromid.

Als Säureakzeptoren können alle üblichen Säurebindemittel Verwendung finden. Besonders bewährt haben sich Alkalicarbonate und -alkoholate, wie Natrium- und Kaliumcarbonat, Natrium- und Kaliummethylat bzw. -äthylat, ferner aliphatische, aromatische oder heterocyclische Amine, beispielsweise Triäthylamin, Trimethylamin, Dimethylanilin, Dimethylbenzylamin und Pyridin.

Die Reaktionstemperatur kann innerhalb eines grösseren Bereichs variiert werden. Im allgemeinen arbeitet man zwischen 0 und 150 °C, vorzugsweise bei der Verfahrensvariante a) bei 10 bis 40 °C und bei der Verfahrensvariante b) bei 100 bis 130 °C.

Die Umsetzung lässt man im allgemeinen bei Normaldruck ablaufen.

Die Verfahren zur Herstellung der erfindungsgemässen Verbindungen werden bevorzugt unter Mitverwendung geeigneter Lösungs- oder Verdünnungsmittel durchgeführt. Als solche kommen praktisch alle inerten organischen Solventien infrage. Hierzu gehören insbesondere aliphatische und aromatische, gegebenenfalls chlorierte Kohlenwasserstoffe, wie Benzol, Toluol, Xylol, Benzin, Methylenchlorid, Chloroform, Tetrachlorkohlenstoff, Chlorbenzol, oder Äther, z.B. Diäthyl- und Dibutyläther, Dioxan, ferner Ketone, beispielsweise Aceton, Methyläthyl-, Methylisopropyl- und Methylisobutylketon, ausserdem Nitrile, wie Aceto- und Propionitril, oder Formamide, z.B. Dimethylformamid.

Zur Durchführung der Verfahrensvariante a) setzt man die Ausgangsstoffe vorzugsweise im äquimolaren Verhältnis ein. Ein Überschuss der einen oder anderen Reaktionskomponente bringt keine wesentlichen Vorteile. Die Reaktionskomponenten werden meist in einem der angegebenen Lösungsmittel zusammengegeben und in Gegenwart eines Säureakzeptors meist bei erhöhter Temperatur ein bis mehrere Stunden gerührt. Danach arbeitet man die Reaktionsmischung in der Weise auf, dass man sie in Wasser giesst, die organische Phase abtrennt und diese dann wie üblich durch Waschen, Trocknen und Abdestillieren des Lösungsmittels aufarbeitet.

Bei der Umesterung nach Verfahrensvariante a) wird in üblicher Weise so verfahren, dass man den Methyl- oder Äthyl-Ester der Cyclopropancarbonsäure gegebenenfalls in einem geeigneten Lösungsmittel zusammen mit 10–30% Überschuss des Alkohols der Formel (II) vorlegt und unter Zugabe von Alkalimethylat oder -äthylat erhitzt. Der entstehende niedriger siedende Alkohol wird dabei laufend abdestilliert.

Bei der Durchführung der Verfahrensvariante b) setzt man vorzugsweise das Cyclopropancarbonsäurederivat in Form eines Alkalisalzes ein. Dieses wird in einem der angegebenen Lösungsmittel zusammen mit dem Benzylhalogenidderivat auf 80°–140 °C erhitzt. Ein Überschuss der einen oder anderenReaktionskomponente bringt keine Vorteile. Nach beendeter Reaktion wird das Lösungsmittel abdestilliert, der Rückstand in Methylenchlorid aufgenommen und die organische Phase wie oben beschrieben aufgearbeitet.

Die neuen Verbindungen fallen in Form von Ölen an, die sich meist nicht unzersetzt destillieren lassen, jedoch durch sogenanntes «Andestillieren», d.h. durch längeres Erhitzen unter vermindertem Druck auf mässig erhöhte Temperaturen von den letzten flüchtigen Anteilen befreit und auf diese Weise gereinigt werden. Zu ihrer Charakterisierung dient der Brechungsindex oder der Siedepunkt.

Die erfindungsgemässen substituierten Phenoxybenzyloxycarbonylderivate wirken nicht nur gegen Pflanzen-, Hygiene- und Vorratsschädlinge, sondern auch auf dem veterinär-medizinischen Sektor gegen tierische Parasiten (Ektoparasiten), wie parasitierende Fliegenlarven und Zecken.

Die Wirkstoffe eignen sich bei guter Pflanzenverträglichkeit und günstiger Warmblütertoxizität zur Bekämpfung von tierischen Schädlingen, insbesondere Insekten und Spinnentieren, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z.B. Oniscus asellus, Armadillidium vulgare, Porcellio scaber.

Aus der Ordnung der Diplopoda z.B. Blaniulus guttulatus.

Aus der Ordnung der Chilopoda z.B. Geophilus carpophagus, Scutigera spec.

Aus der Ordnung der Symphyla z.B. Scutigerella immaculata.

Aus der Ordnung der Thysanura z.B. Lepisma saccharina.

Aus der Ordnung der Collembola z.B. Onychiurus armatus.

Aus der Ordnung der Orthoptera z.B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.

Aus der Ordnung der Dermaptera z.B. Forficula auricularia.

Aus der Ordnung der Isoptera z.B. Reticulitermes spp.

Aus der Ordnung der Anoplura z.B. Phylloxera vastatrix, Pemphigus spp., Pediculus humanus corporis, Haematopinus spp., Linognathus spp.

Aus der Ordnung der Mallophaga z.B. Trichodectes spp., Damalinea spp.

Aus der Ordnung der Thysanoptera z.B. Hercinothrips femoralis, Thrips tabaci.

Aus der Ordnung der Heteroptera z.B. Eurygaster spp., Dysdercus intermedius, Piesma quadrata, Cimex lectularius, Rhodnius prolixus, Triatoma spp.

Aus der Ordnung der Homptera z.B. Aleurodes brassicae, Bemisia tabaci, Trialeurodes vaporariorum, Aphis gossypii, Brevicoryne brassicae, Cryptomyzus ribis, Doralis fabae, Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp., Psylla spp.

Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp., Bucculatrix thurberiella, Phyllocnistis citrella, Agrotis spp., Euxoa spp., Feltia spp., Earias insulana, Heliothis spp., Laphygma exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Cacoecia podana, Capua reticulana, Choristoneura fumiferana, Clysia ambiguella, Homona magnanima, Tortrix viridana.

Aus der Ordnung der Coleoptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica.

Aus der Ordnung der Hymenoptera z.B. Diprion spp., Hoplocampa spp., Lasius spp., Monomorium pharaonis, Vespa spp.

Aus der Ordnung der Diptera z.B. Aëdes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.

Aus der Ordnung der Siphonaptera z.B. Xenopsylla cheopis, Ceratophyllus spp.

Aus der Ordnung der Arachnida z.B. Scorpio maurus, Latrodectus mactans.

Aus der Ordnung der Acarina z.B. Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp.

Die Wirkstoffe können in die üblichen Formulierungen übergeführt werden, wie Lösungen, Emulsionen, Spritzpulver, Suspensionen, Pulver, Stäubemittel, Schäume, Pasten, lösliche Pulver, Granulate, Aerosole, Suspensions-Emulsionskonzentrate, Saatgutpuder, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä. sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen infrage: Aromaten, wie Xylol, Toluol, oder Alkylnaphthaline, chlorierte Aromaten oder chlorierte aliphatische Kohlenwasserstoffe, wie Chlorbenzole, Chloräthylene oder Methylenchlorid, aliphatische Kohlenwasserstoffe, wie Cyclohexan oder Paraffine, z.B. Erdölfraktionen, Alkohole, wie Butanol oder Glycol sowie deren Äther und Ester, Ketone, wie Aceton, Methyläthylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid; als feste Trägerstoffe: natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste

Trägerstoffe für Granulate: gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehle, Kokosnusschalen, Maiskolben und Tabakstengel; als Emulgier- und/oder schaumerzeugende Mittel: nichtionogene und anionische Emulgatoren, wie Polyoxyäthylen-Fettsäure-Ester, Polyoxyäthylen-Fettalkohol-Äther, z.B. Alkylaryl-polyglykol-äther, Alkylsulfonate, Alkylsulfate, Arylsulfonate sowie Eiweisshydrolysate; als Dispergiermittel: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat.

Es können Farbstoffe wie anorganische Pigmente, z.B. Eisenoxid, Titanoxid, Ferrocyanblau und organische Farbstoffe, wie Alizarin-, Azo-Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90%.

Die Anwendung der erfindungsgemässen Wirkstoffe erfolgt in Form ihrer handelsüblichen Formulierungen und/oder den aus diesen Formulierungen bereiteten Anwendungsformen.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 100 Gew.-% Wirkstoff, vorzugsweise zwischen 0,01 und 10 Gew.-% liegen.

Die Anwendung geschieht in einer den Anwendungsformen angepassten üblichen Weise.

Bei der Anwendung gegen Hygiene- und Vorratsschädlinge zeichnen sich die Wirkstoffe durch eine hervorragende Residualwirkung auf Holz und Ton sowie durch eine gute Alkalistabilität auf gekälkten Unterlagen aus.

Die Anwendung der erfindungsgemässen Wirkstoffe geschieht im Veterinärsektor in bekannter Weise, wie durch orale Anwendung in Form von beispielsweise Tabletten, Kapseln, Tränken, Granulaten, durch dermale Anwendung in Form beispielsweise des Tauchens (Dippen), Sprühens (Sprayen), Aufgiessens (pour-on and spot-on) und des Einpuderns sowie durch parenterale Anwendung in Form beispielsweise der Injektion.

Beispiel A

Phaedon-Larven-Test

Lösungsmittel: 3 Gewichtsteile Dimethylformamid

Emulgator: 1 Gewichtsteil Alkylarylpolyglykoläther

Zur Herstellung einer zweckmässigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Mit der Wirkstoffzubereitung besprüht man Kohlblätter (Brassica oleracea) tropfnass und besetzt sie mit Meerrettichblattkäfer-Larven (Phaedon Cochleariae).

Nach den angegebenen Zeiten wird die Abtötung in % bestimmt. Dabei bedeutet 100%, dass alle Käfer-Larven abgetötet wurden; 0% bedeutet, dass keine Käfer-Larven abgetötet wurden.

Wirkstoffe, Wirkstoffkonzentrationen, Zeiten der Auswertung und Resultate gehen aus der nachfolgenden Tabelle hervor:

Tabelle
(pflanzenschädigende Insekten) Phaedon-Larven-Test

| Wirkstoffe | Wirkstoffkonzentration in % | Abtötungsgrad in % nach 3 Tagen |
|---|---|---|
| 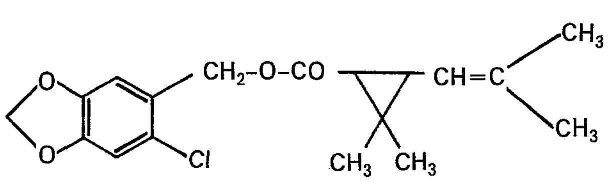<br>(bekannt) | 0,1<br>0,01<br>0,001 | 100<br>100<br>0 |
| 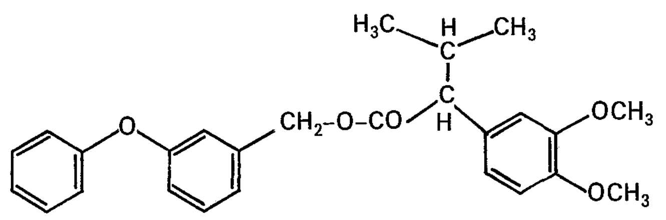<br>(bekannt) | 0,1<br>0,01<br>0,001 | 100<br>90<br>0 |

Tabelle (Fortsetzung)
(pflanzenschädigende Insekten) Phaedon-Larven-Test

| Wirkstoffe | Wirkstoffkonzentration in % | Abtötungsgrad in % nach 3 Tagen |
|---|---|---|
| 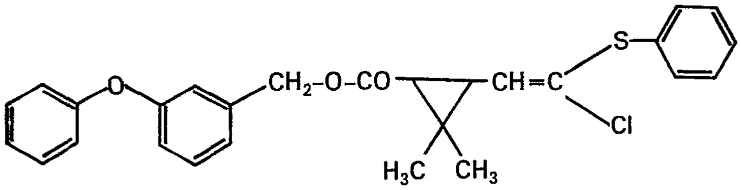 | 0,1<br>0,01<br>0,001 | 100<br>100<br>100 |
| 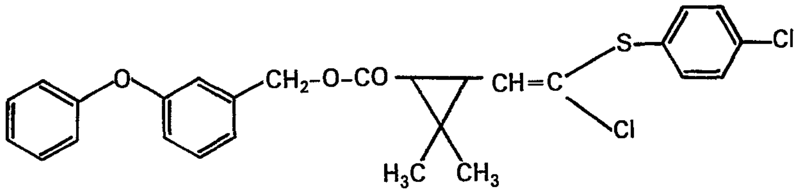 | 0,1<br>0,01<br>0,001 | 100<br>100<br>100 |
| 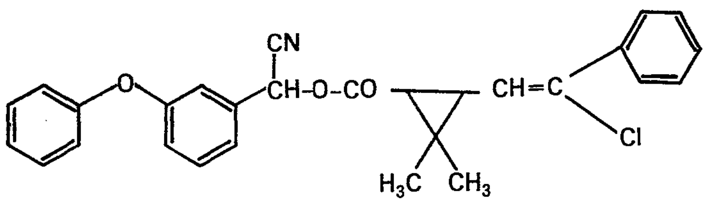 | 0,1<br>0,01<br>0,001 | 100<br>100<br>100 |

Beispiel B
Myzus-Test (Kontakt-Wirkung)
Lösungsmittel: 3 Gewichtsteile Dimethylformamid
Emulgator: 1 Gewichtsteil Alkylarylpolyglykoläther

Zur Herstellung einer zweckmässigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Mit der Wirkstoffzubereitung werden Kohlpflanzen (Brassica oleracea), welche stark von der Pfirsichblattlaus (Myzus persicae) befallen sind, tropfnass besprüht.

Nach den angegebenen Zeiten wird die Abtötung in % bestimmt. Dabei bedeutet 100%, dass alle Blattläuse abgetötet wurden; 0% bedeutet, dass keine Blattläuse abgetötet wurden.

Wirkstoffe, Wirkstoffkonzentrationen, Auswertungszeiten und Resultate gehen aus der nachfolgenden Tabelle hervor:

Tabelle
(pflanzenschädigende Insekten) Myzus-Test

| Wirkstoffe | Wirkstoffkonzentration in % | Abtötungsgrad in % nach 1 Tag |
|---|---|---|
| 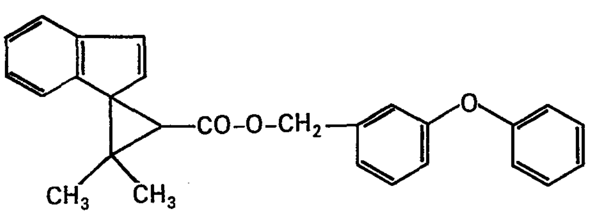<br>(bekannt) | 0,1<br>0,01 | 50<br>0 |

Tabelle (Fortsetzung)
(pflanzenschädigende Insekten) Myzus-Test

| Wirkstoffe | Wirkstoffkonzentration in % | Abtötungsgrad in % nach 1 Tag |
|---|---|---|
| 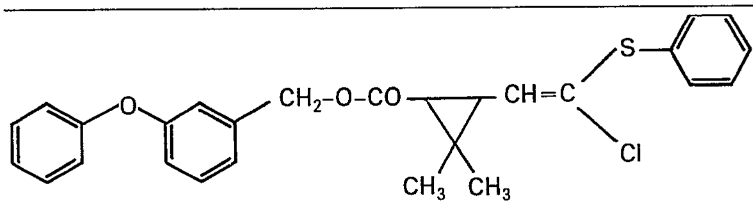 | 0,1<br>0,01 | 100<br>100 |
| 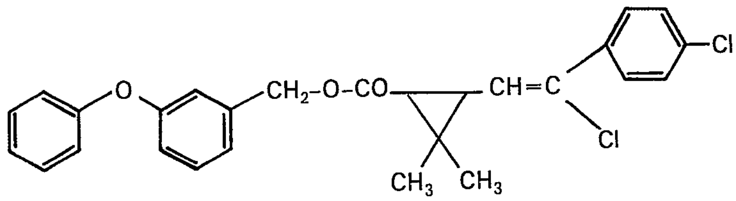 | 0,1<br>0,01 | 100<br>90 |
| 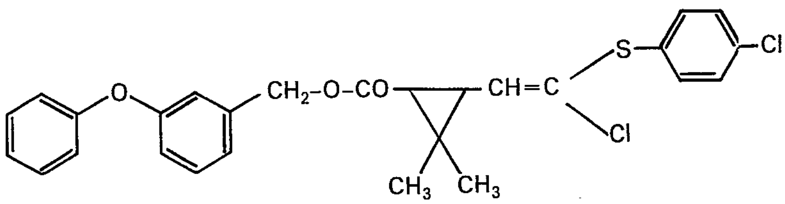 | 0,1<br>0,01 | 100<br>90 |
| 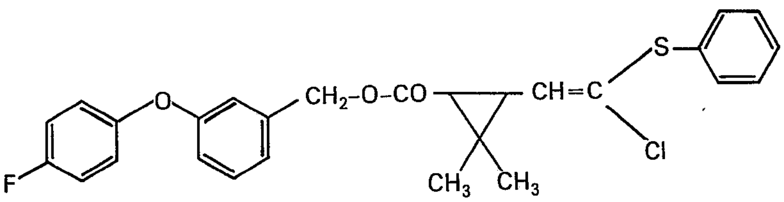 | 0,1<br>0,01 | 100<br>95 |
| 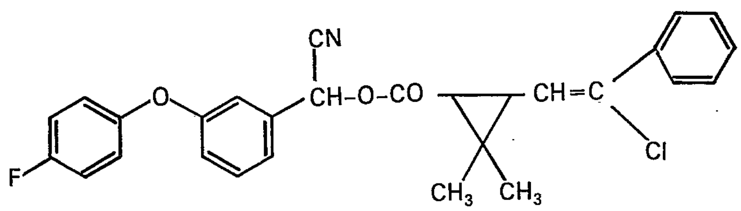 | 0,1<br>0,01 | 100<br>100 |
| 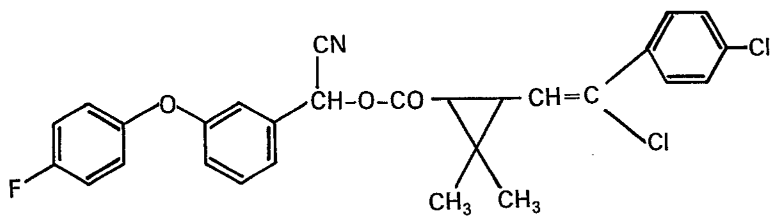 | 0,1<br>0,01 | 100<br>100 |

Beispiel C
Tetranychus-Test (resistent)

Lösungsmittel: 3 Gewichtsteile Dimethylformamid
Emulgator: 1 Gewichtteil Alkylarylpolyglykoläther

Zur Herstellung einer zweckmässigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Mit der Wirkstoffzubereitung werden Bohnenpflanzen (Phaseolus vulgaris), die stark von allen Entwicklungsstadien der gemeinen Spinnmilbe oder Bohnenspinnmilbe (Tetranychus urticae) befallen sind, tropfnass besprüht.

Nach den angegebenen Zeiten wird die Abtötung in % bestimmt. Dabei bedeutet 100%, dass alle Spinnmilben abgetötet wurden; 0% bedeutet, dass keine Spinnmilben abgetötet wurden.

Wirkstoffe, Wirkstoffkonzentrationen, Auswertungszeiten und Resultate gehen aus der nachfolgenden Tabelle hervor:

Tabelle
(pflanzenschädigende Insekten) Tetranychus-Test

| Wirkstoffe | Wirkstoffkonzentration in % | Abtötungsgrad in % nach 2 Tagen |
|---|---|---|
| 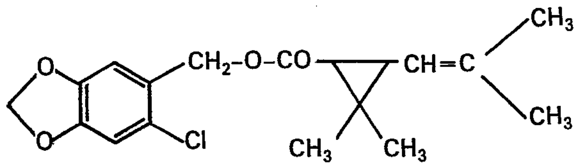 (bekannt) | 0,1 | 0 |
| 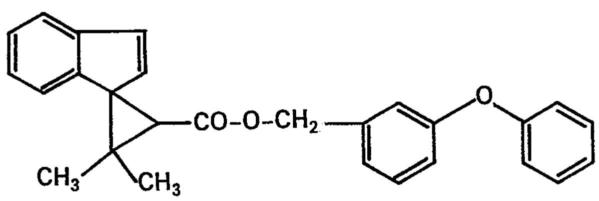 (bekannt) | 0,1 | 0 |
| 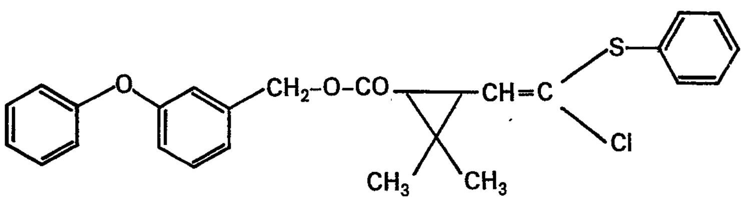 | 0,1 | 90 |
| 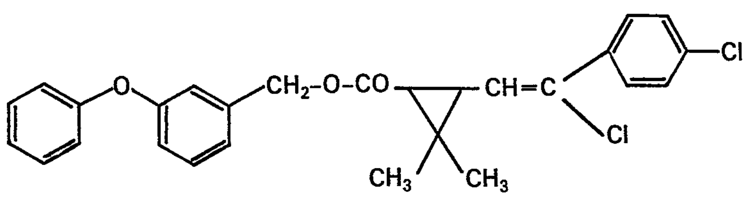 | 0,1 | 98 |
| 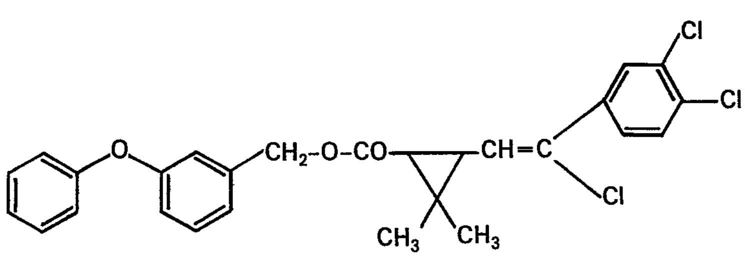 | 0,1 | 98 |
| 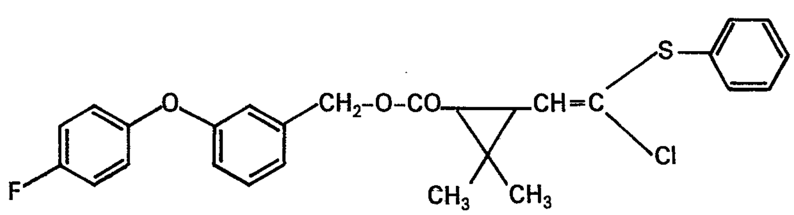 | 0,1 | 90 |

Tabelle (Fortsetzung)
(pflanzenschädigende Insekten) Tetranychus-Test

| Wirkstoffe | Wirkstoffkonzentration in % | Abtötungsgrad in % nach 2 Tagen |
|---|---|---|
| 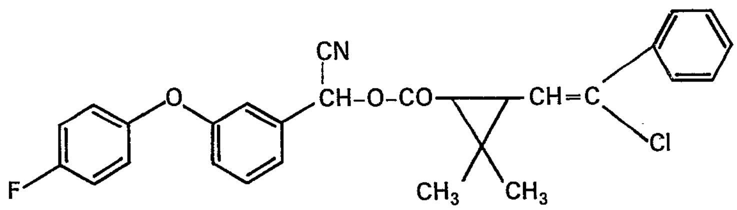 | 0,1 | 98 |
| 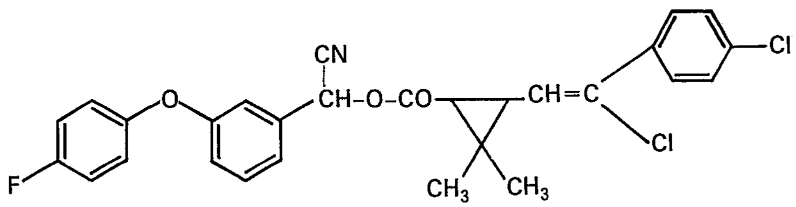 | 0,1 | 100 |

Beispiel D
Test mit parasitierenden adulten Rinderzecken (Boophilus microplus res.)
Lösungsmittel: Alkylarylpolyglykoläther

Zur Herstellung einer zweckmässigen Wirkstoffzubereitung vermischt man die betreffende aktive Substanz mit dem angegebenen Lösungsmittel im Verhältnis 1:2 und verdünnt das so erhaltene Konzentrat mit Wasser auf die gewünschte Konzentration.

10 adulte Rinderzecken (b. microplus res.) werden in der zu testenden Wirkstoffzubereitung 1 Min. getaucht. Nach Überführung in Plastikbecher und Aufbewahrung in einem klimatisierten Raum wird der Abtötungsgrad in Prozent bestimmt, wobei 100% bedeuten, dass alle und 0%, dass keine Zecken abgetötet worden sind.

Tabelle

| Wirkstoff | Wirkstoffkonzentration in ppm | abtötende Wirkung in % |
|---|---|---|
| 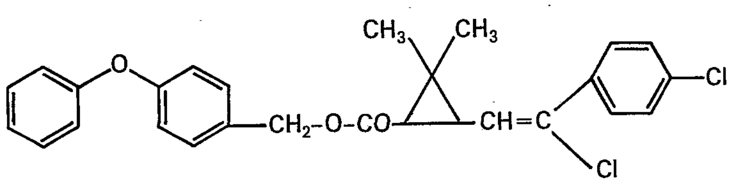 | 10 000 | 100 |

Beispiel E
Test mit parasitierenden Fliegenlarven (Lucilia cuprina)
Emulgator: 80 Gewichtsteile Alkylarylglykoläther

Zur Herstellung einer zweckmässigen Wirkstoffzubereitung vermischt man 20 Gewichtsteile der betreffenden aktiven Substanz mit der angegebenen Menge des Emulgators und verdünnt das so erhaltene Gemisch mit Wasser auf die gewünschte Konzentration.

Etwa 20 Fliegenlarven (Lucilia cuprina) werden in ein mit Wattestopfen entsprechender Grösse beschicktes Teströhrchen gebracht, welches ca. 3 ml einer 20%igen Eigelbpulver-Suspension in Wasser enthält. Auf diese Eigelbpulver-Suspension werden 0,5 ml der Wirkstoffzubereitung gebracht. Nach 24 Stunden wird der Abtötungsgrad in % bestimmt. Dabei bedeuten 100%, dass alle und 0%, dass keine Larven abgetötet worden sind.

Tabelle

| Wirkstoffe | Wirkstoffkonzentration in % | abtötende Wirkung in % |
|---|---|---|
| 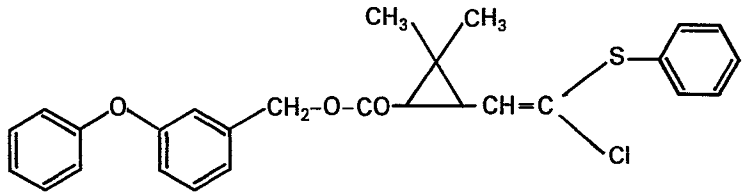 | 1000 | 100 |
| 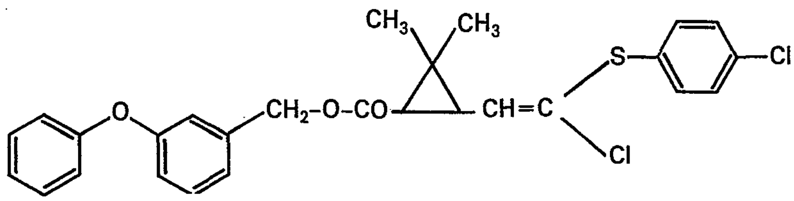 | 1000 | 100 |

## HERSTELLUNGSBEISPIELE

### Beispiel 1:

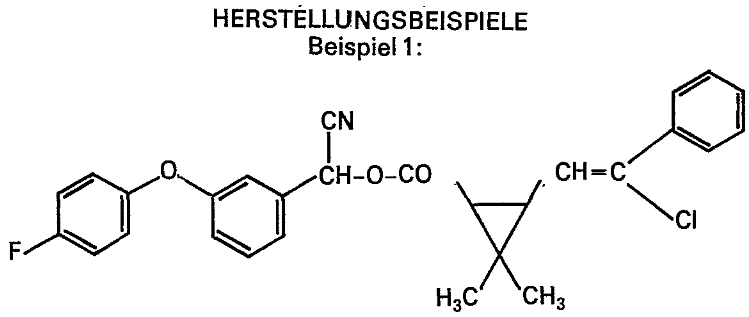

7,3 g (0,03 Mol) 3-(4-Fluorphenoxy)-α-cyanbenzylalkohol und 8,1 g (0,03 Mol) 2,2-Dimethyl-3-(2-phenyl-2-chlorvinyl)-cyclopropancarbonsäurechlorid werden in 150 ml wasserfreiem Toluol gelöst und bei 25–30 °C 2,4 g (0,03 Mol) Pyridin, gelöst in 50 ml Toluol, unter Rühren zugetropft. Anschliessend wird weitere 3 Stunden bei 25 °C gerührt. Das Reaktionsgemisch wird in 150 ml Wasser gegossen, die organische Phase abgetrennt und nochmals mit 100 ml Wasser gewaschen.

Anschliessend wird die Toluolphase über Natriumsulfat getrocknet und das Lösungsmittel im Wasserstrahlvakuum abdestilliert. Letzte Lösungsmittelreste werden durch kurzes Andestillieren bei 60 °C/1 Torr Badtemperatur entfernt. Man erhält 12,0 g (84% der Theorie) 3′-(4-Fluorphenoxy)-α-cyanbenzyl-2,2-dimethyl-(2-phenyl-2-chlorvinyl)-cyclopropancarboxylat als gelbes Öl mit dem Brechungsindex $n_D^{24}$: 1,5670.

### Beispiel 2:

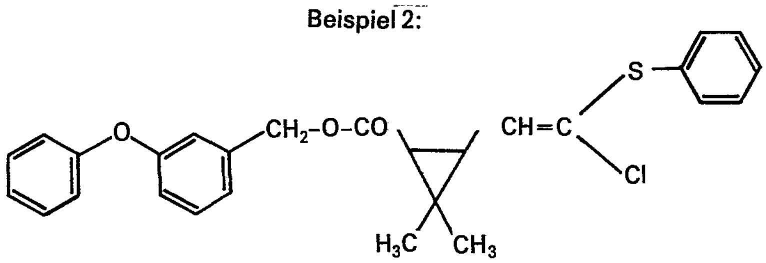

24,3 g (0,05 Mol) 2,2-Dimethyl-3-(2-phenylthio-2-chlorvinyl)-cyclopropancarbonsäure-natriumsalz werden in 150 ml Dimethylformamid gelöst und zusammen mit 15,8 g (0,06 Mol) 3-Phenoxybenzylbromid 4 Stunden auf 120 °C erhitzt. Nach beendeter Reaktion wird das Dimethylformamid im Vakuum abdestilliert und der verbleibende Rückstand in 200 ml Methylenchlorid aufgenommen. Anschliessend wird zweimal mit je 150 ml Wasser ausgeschüttelt, die organische Phase über Natriumsulfat getrocknet und das Lösungsmittel im Vakuum abgezogen. Letzte Lösungsmittelreste werden durch kurzes Andestillieren bei 60 °C/1 Torr Badtemperatur entfernt. Man erhält 15 g (53,8% der Theorie) 3′-Phenoxy-benzyl-2,2-dimethyl-(2-phenylthio-2-chlorvinyl)-cyclopropancarboxylat als gelbes Öl mit dem Brechungsindex $n_D^{23}$ 1,5948.

In analoger Weise können die folgenden Verbindungen hergestellt werden:

| Beispiel Nr. | Konstitution | Ausbeute (% der Theorie) | Brechungsindex |
|---|---|---|---|
| 3 | 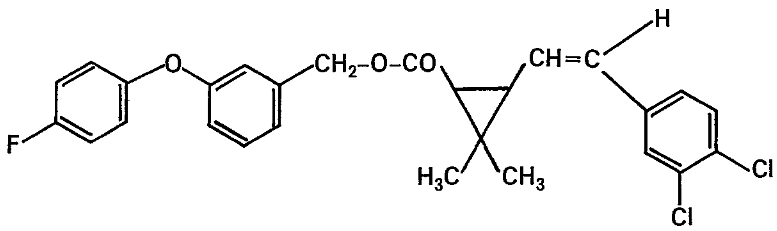 | 72 | $n_D^{22}$: 1,5851 |
| 4 | 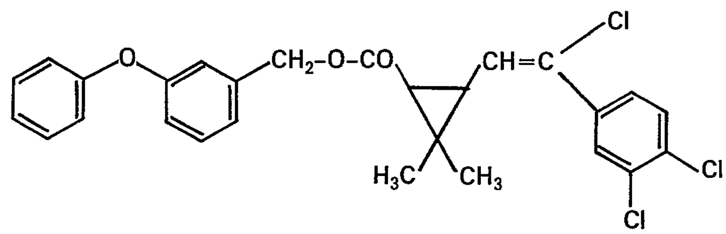 | 49,8 | $n_D^{24}$: 1,5872 |
| 5 | 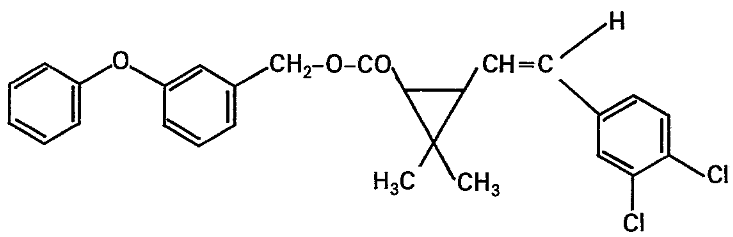 | 73,9 | $n_D^{24}$: 1,6014 |
| 6 | 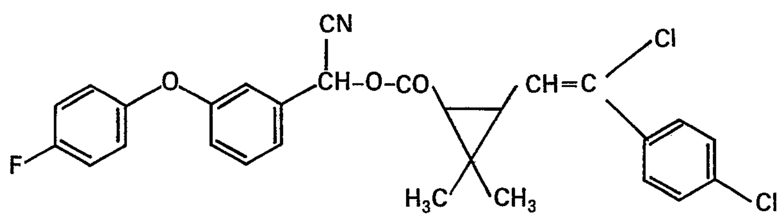 | 71 | $n_D^{24}$: 1,5705 |
| 7 | 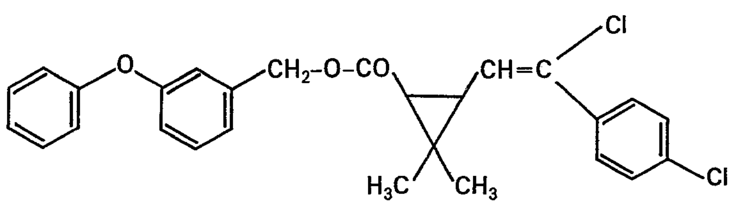 | 58,9 | $n_D^{23}$: 1,5914 |
| 8 | 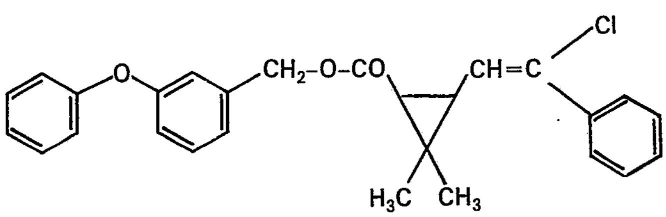 | 67,5 | $n_D^{23}$: 1,5782 |

| Beispiel Nr. | Konstitution | Ausbeute (% der Theorie) | Brechungsindex |
|---|---|---|---|
| 9 | 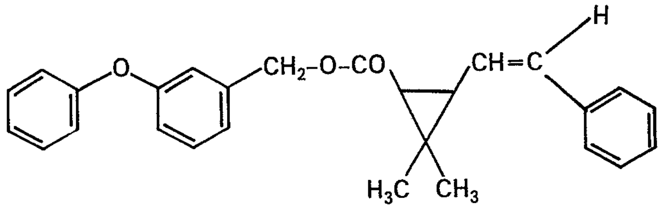 | 82 | $n_D^{23}$: 1,5805 |
| 10 | 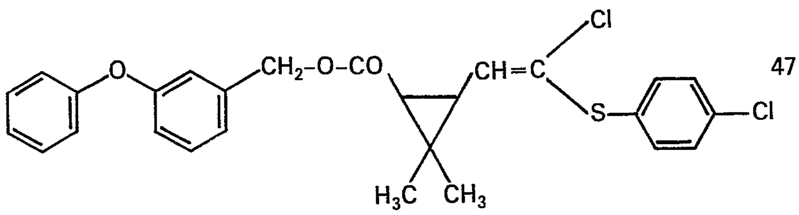 | 47 | $n_D^{24}$: 1,6017 |
| 11 | 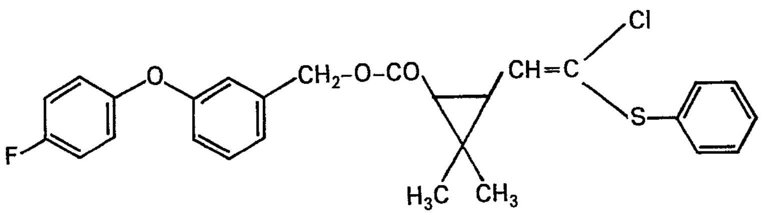 | 51,9 | $n_D^{23}$: 1,5961 |
| 12 | 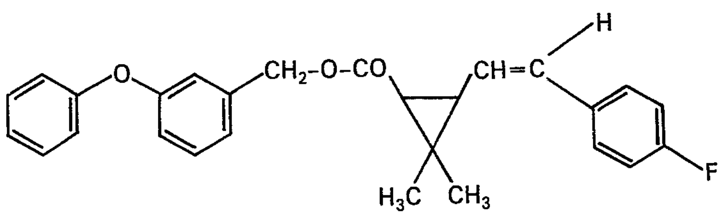 | 62,5 | $n_D^{26}$: 1,5762 |
| 13 | 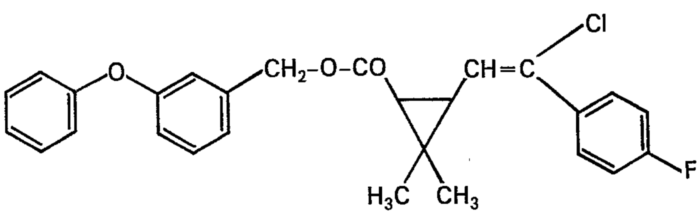 | 66,6 | $n_D^{26}$: 1,5790 |
| 14 | 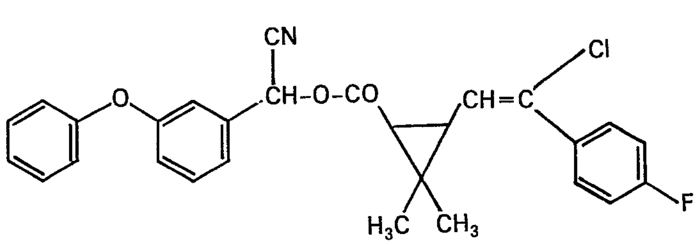 | | |

| Beispiel Nr. | Konstitution | Ausbeute (% der Theorie) | Brechungsindex |
|---|---|---|---|
| 15 | 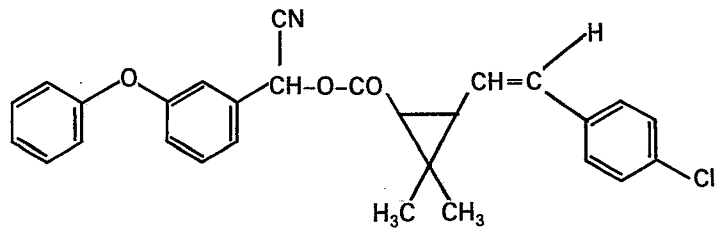 | | |
| 16 | 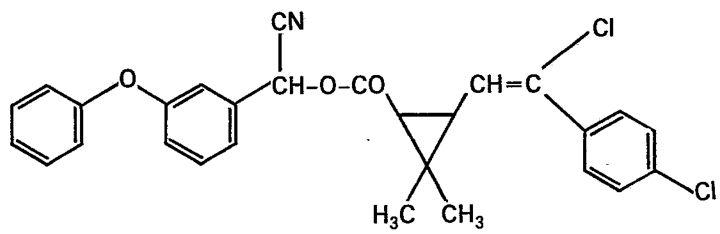 | 82,2 | $n_D^{25}$: 1,5900 |
| 17 | 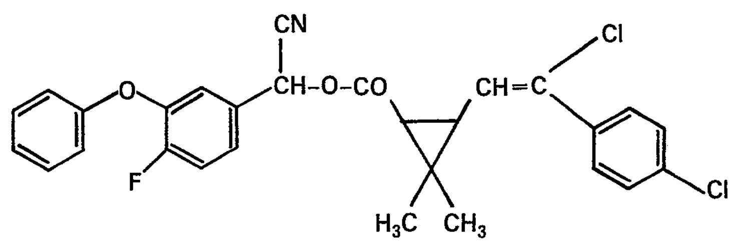 | 85,2 | $n_D^{25}$: 1,5831 |
| 18 | 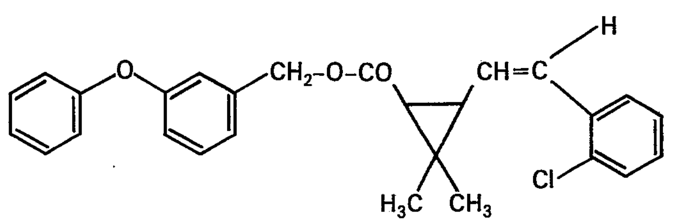 | 74,0 | $n_D^{25}$: 1,5945 |
| 19 | 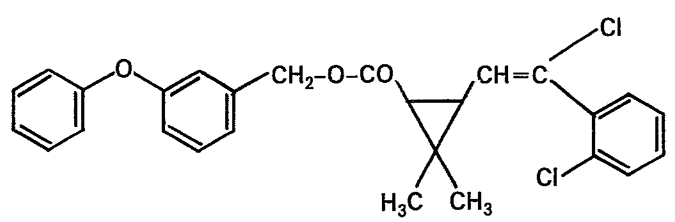 | 68,3 | $n_D^{25}$: 1,5896 |
| 20 | 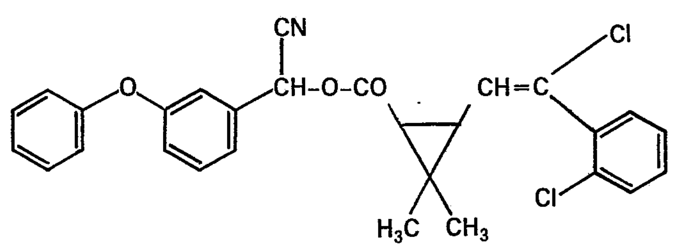 | | |

| Beispiel Nr.: | Konstitution | Ausbeute (% der Theorie) | Brechungsindex |
|---|---|---|---|
| 21 | 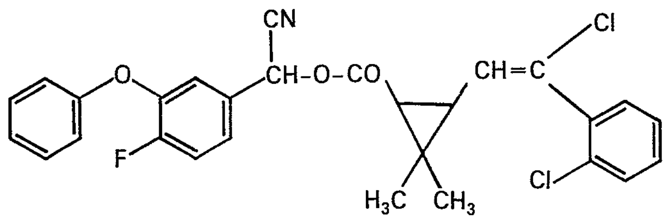 | | |
| 22 | 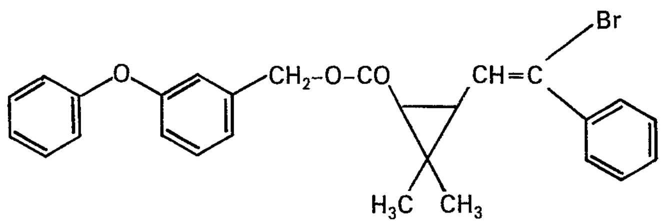 | | |
| 23 | 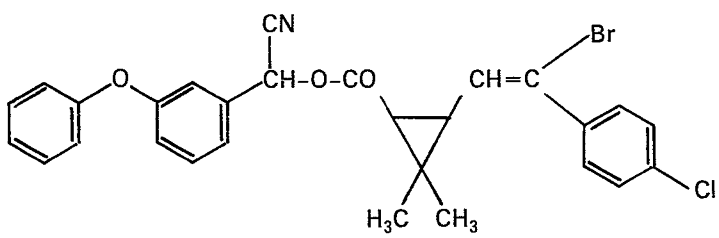 | | |
| 24 | 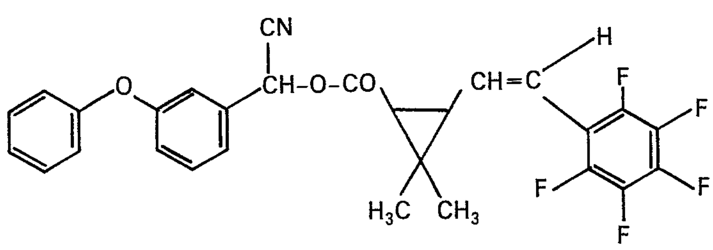 | | |
| 25 | 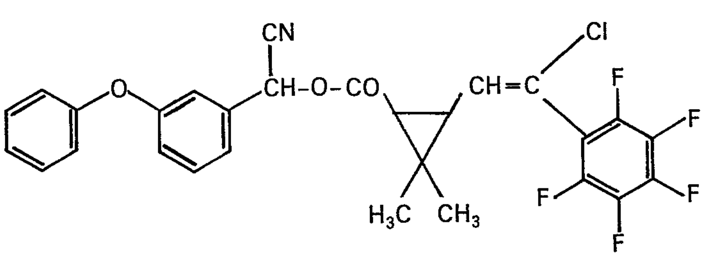 | | |
| 26 | 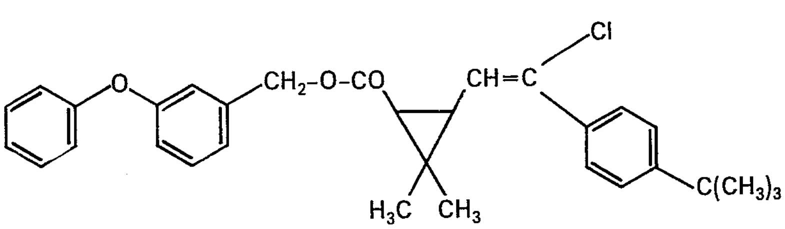 | | |

| Beispiel Nr. | Konstitution | Ausbeute (% der Theorie) | Brechungsindex |
|---|---|---|---|
| 27 | 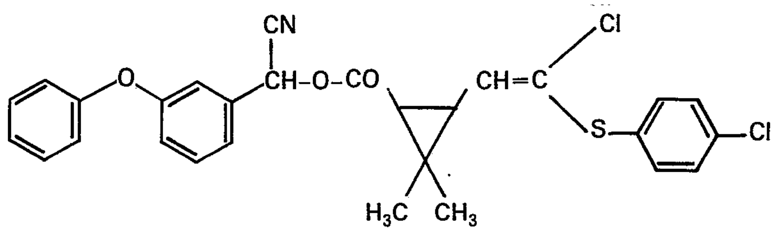 | | |
| 28 | 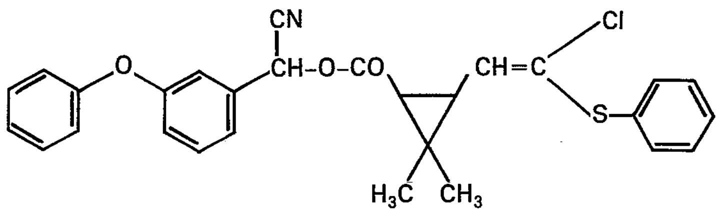 | | |
| 29 | 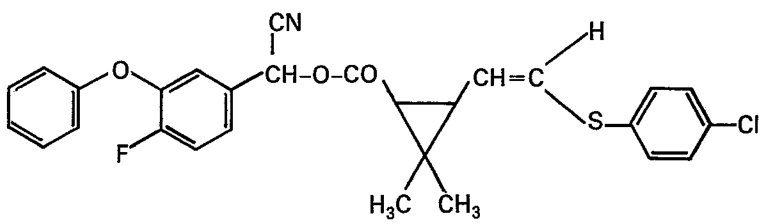 | | |
| 30 | 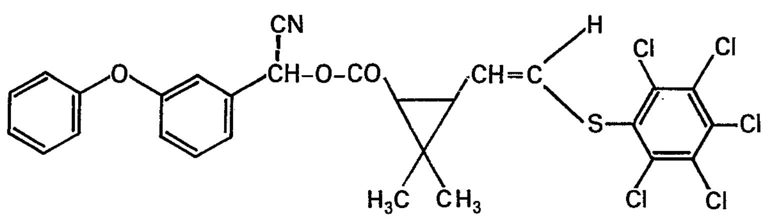 | | |
| 31 | 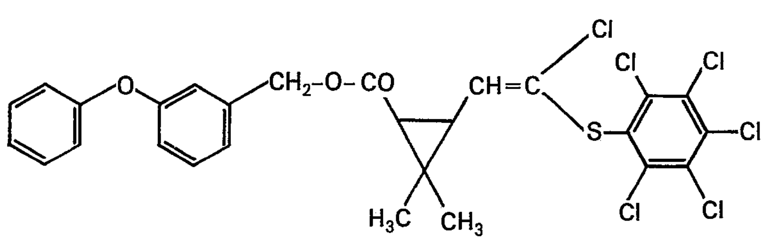 | | |
| 32 | 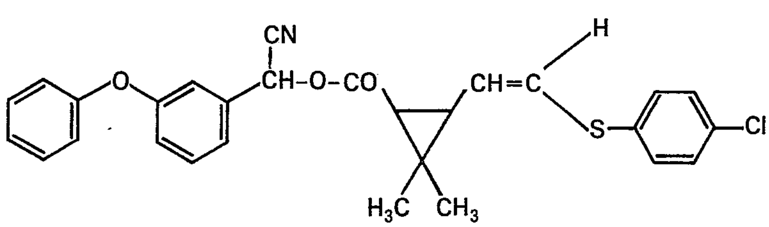 | | |

| Beispiel Nr. | Konstitution | Ausbeute (% der Theorie) | Brechungs-index |
|---|---|---|---|
| 33 | 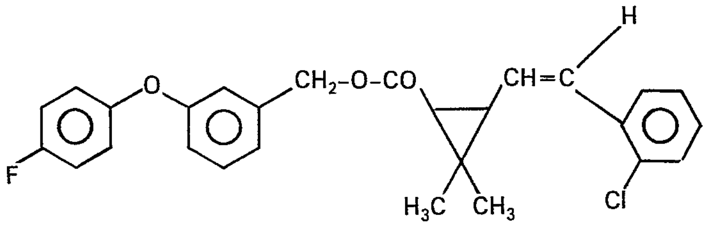 | 88,7 | $n_D^{25}$: 1,5868 |

Die Verbindungen der folgenden Seiten sind Gegenstand einer Ausscheidungsanmeldung der Nr. 79 103 787.2.

Die als Ausgangsverbindungen benötigten Cyclopropancarbonsäuren (V) bzw. deren Salze und Säurechloride (III) können wie im folgenden beschrieben hergestellt werden:

a) 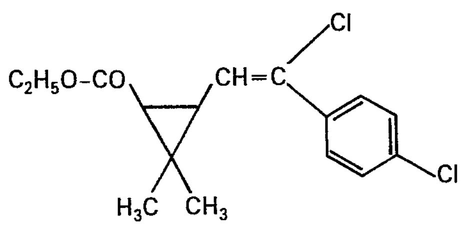

26,3 g (0,1 Mol) 4-Chlorbenzyl-phosphonsäurediäthylester werden in 400 ml absolutem Tetrahydrofuran gelöst und auf -70 °C abgekühlt. Im Stickstoffgegenstrom und unter gutem Rühren werden 0,11 Mol n-Butyllithium (15%ige Lösung in Hexan) zugetropft und dann die Reaktionsmischung noch 15 Minuten bei -70 °C nachgerührt. Anschliessend werden weiterhin unter Stickstoff 15,4 g (0,1 Mol) Tetrachlorkohlenstoff bei -70 °C zugetropft, die Reaktionsmischung färbt sich dabei rotbraun. Nach weiterem 15minütigem Rühren gibt man bei -65 °C 18,6 g (0,1 Mol) 2,2-Dimethyl-3-formyl-cyclopropancarbonsäureäthylester zu. Man lässt dann die Reaktionsmischung auf Raumtemperatur kommen und rührt noch 3 Stunden bei 25 °C nach. Der Reaktionsansatz wird dann in 2 l Wasser gegossen und mit 600 ml Äther extrahiert. Die Ätherphase wird über Natriumsulfat getrocknet, das Lösungsmittel im Vakuum abgezogen und der ölige Rückstand bei 150–155 °C/2 Torr destilliert. Man erhält in 54,3%iger Ausbeute 2,2-Dimethyl-3-(2-chlor-2-p-chlor-phenyl-vinyl)-cyclopropancarbonsäureäthylester.

Analog können dargestellt werden:

| Konstitution | Ausbeute (% der Theorie) | Physikal. Daten (Brechungsindex: Siedepunkt °C/Torr) |
|---|---|---|
| 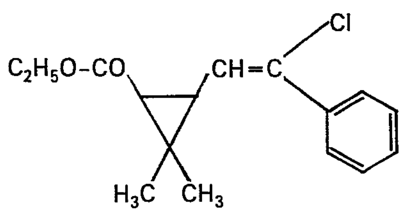 | 48 | $n_D^{23}$: 1,5222 |
| 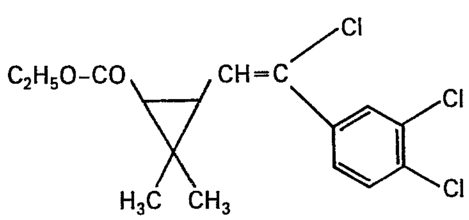 | 45,4 | $n_D^{25}$: 1,5621 |
| 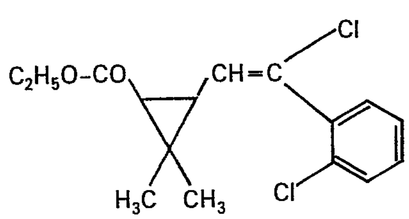 | 52,7 | 155–160/1 |

Tabelle (Fortsetzung)

| Konstitution | Ausbeute (% der Theorie) | Physikal. Daten (Brechungsindex: Siedepunkt °C/Torr) |
|---|---|---|
| 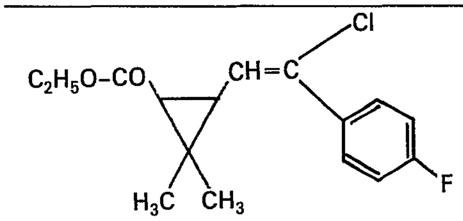 | 57 | $n_D^{25}$: 1,5208 |
| 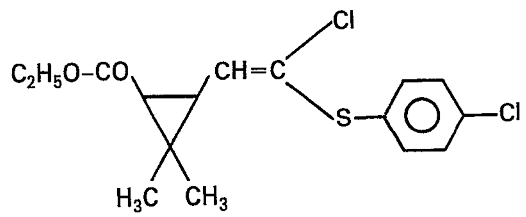 | 81 | $n_D^{25}$: 1,5025 |
| 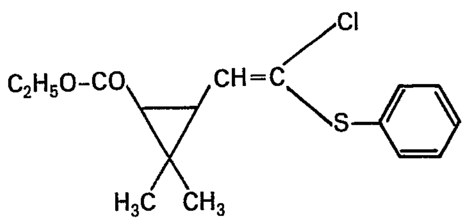 | 71 | $n_D^{26}$: 1,5359 |

b) 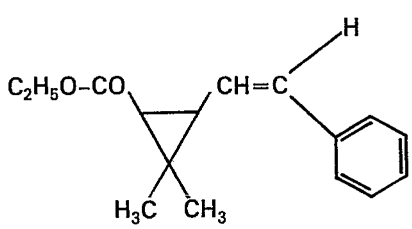

22,8 g (0,1 Mol) Benzyl-phosphonsäurediäthylester werden in 400 ml absolutem Tetrahydrofuran gelöst und auf -70°C abgekühlt. Im Stickstoffgegenstrom und unter gutem Rühren werden 0,11 Mol n-Butyllithium (15%ige Lösung in Hexan) zugetropft, dann wird noch 15 Minuten bei -70°C nachgerührt und anschliessend werden bei -65°C ebenfalls noch unter Stickstoff 18,6 g (0,1 Mol) 2,2-Dimethyl-3-formyl-cyclopropancarbonsäureäthylester zugetropft. Man lässt dann die Reaktionsmischung auf Raumtemperatur kommen und rührt noch 3 Stunden bei 25°C.

Der Reaktionsansatz wird dann in 2 l Wasser gegossen und mit 600 ml Äther extrahiert. Die Ätherphase wird über Natriumsulfat getrocknet und dann das Lösungsmittel im Vakuum abgezogen. Der ölige Rückstand wird bei 145-150°C/3 Torr destilliert. Man erhält in 69,6%iger Ausbeute 2,2-Dimethyl-3-(2-phenyl-vinyl)-cyclopropancarbonsäureäthylester mit dem Brechungsindex $n_D^{23}$: 1,5022.

Analog können dargestellt werden:

| Konstitution | Ausbeute (% der Theorie) | Physikal. Daten (Brechungsindex: Siedepunkt °C/Torr) |
|---|---|---|
| 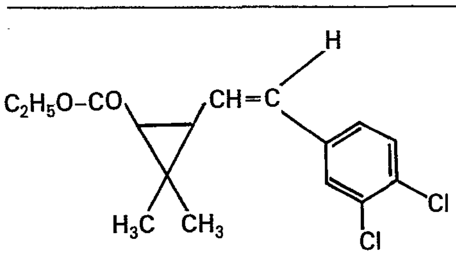 | 70,2 | $n_D^{25}$: 1,5584 |

Tabelle (Fortsetzung)

| Konstitution | Ausbeute (% der Theorie) | Physikal. Daten (Brechungsindex: Siedepunkt °C/Torr) |
|---|---|---|
| 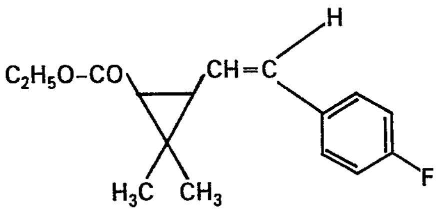 | 49,6 | $n_D^{25}$: 1,5057 |
| 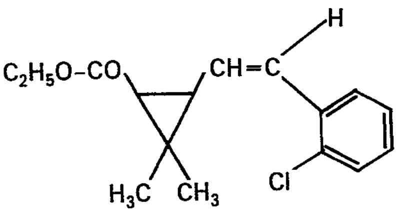 | 46 | 150–155/1 |

Die nach Beispiel a) oder b) dargesellten Cyclopropancarbonsäureäthylester werden nach bekannten Methoden sauer oder alkalisch zu den entsprechenden Säuren verseift. Diese werden nach ebenfalls bekannten Verfahren in die entsprechenden Salze (z.B. Alkali- oder Ammoniumsalze) bzw. Säurechloride übergeführt.

**Patentansprüche**

1. Substituierte Phenoxybenzyloxycarbonylderivate der Formel (I)

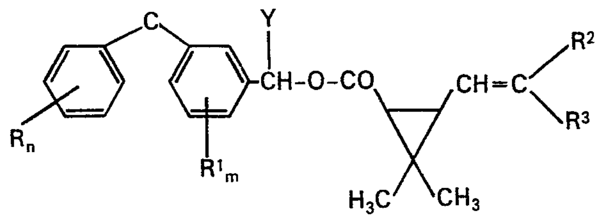 (I)

in welcher
R, $R^1$ und $R^2$ gleich oder verschieden sein können und für Wasserstoff oder Halogen stehen,
$R^3$ für Phenyl oder Phenylthio steht, wobei die Phenylringe gegebenenfalls ein- oder mehrfach gleich oder verschieden durch Alkyl oder Halogen substituiert sein können,
Y für Wasserstoff oder Nitril steht,
n für eine ganze Zahl von 1 bis 5 steht und
m für eine ganze Zahl von 1 bis 4 steht.

2. Substituiertes Phenoxybenzyloxycarbonylderivat der Formel

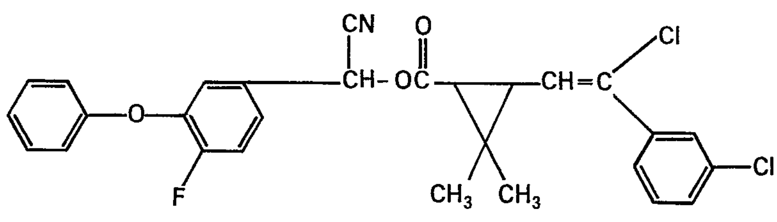

3. Verfahren zur Herstellung der substituierten Phenoxybenzyloxycarbonylderivate der Formel (I) gemäss Anspruch 1, dadurch gekennzeichnet, dass man

a) Phenoxybenzylalkohole der Formel (II)

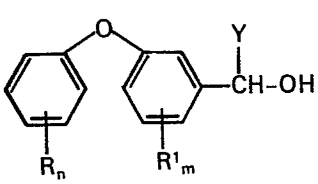 (II)

in welcher
R, $R^1$, Y, n und m die oben angegebene Bedeutung haben,
mit Cyclopropancarbonsäurederivaten der Formel

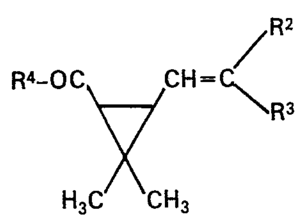 (III)

in welcher
$R^2$ und $R^3$ die oben angegebene Bedeutung haben, und
$R^4$ für Halogen oder $C_{1-4}$-Alkoxy, vorzugsweise Methoxy oder Äthoxy steht,
Hal für Halogen, vorzugsweise Chlor, steht,
gegebenenfalls in Gegenwart eines Säureakzeptors und gegebenenfalls in Gegenwart eines Lösungsmittels umsetzt oder

b) Phenoxybenzylhalogenide der Formel

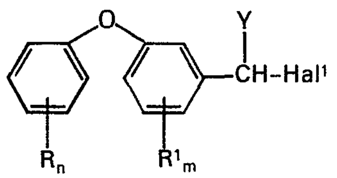

(IV)

in welcher
R, $R^1$, Y, n und m die oben angegebene Bedeutung haben und
Hal für Halogen, vorzugsweise Chlor oder Brom steht, mit Cyclopropancarbonsäurederivaten der Formel

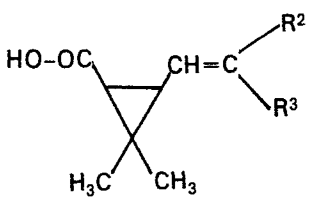

(V)

in welcher
$R^2$ und $R^3$ die oben angegebene Bedeutung haben,
gegebenenfalls in Form der Alkali-, Erdalkali- oder Ammoniumsalze oder gegebenenfalls in Gegenwart eines Säureakzeptors und gegebenenfalls in Gegenwart eines Lösungsmittels umsetzt.

4. Insektizide und akarizide Mittel, gekennzeichnet durch einen Gehalt an substituierten Phenoxybenzyloxycarbonylderivaten der Formel (I), gemäss Anspruch 1.

5. Verwendung von substituierten Phenoxybenzyloxycarbonylderivaten der Formel (I) gemäss Anspruch 1 zur Bekämpfung von Insekten und Acarina.

6. Verfahren zur Herstellung von insektiziden und akariziden Mitteln, dadurch gekennzeichnet, dass man substituierte Phenoxybenzyloxycarbonylderivate der Formel (I) gemäss Anspruch 1 mit Streckmitteln und/oder obeflächenaktiven Stoffen vermischt.

## Patent Claims

1. Substituted phenoxybenzyloxycarbonyl derivatives of the formula (I)

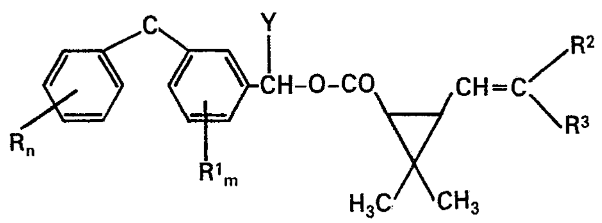

(I)

in which
R, $R^1$ and $R^2$ may be identical or different and represent hydrogen or halogen,
$R^3$ represents phenyl or phenylthio, and the phenyl rings may optionally be monosubstituted or polysubstituted by alkyl or halogen, the substituents in the case of polysubstitution being identical or different,
Y represents hydrogen or nitrile,
n represents an integer from 1 to 5 and
m represents an integer from 1 to 4.

2. Substituted phenoxybenzyloxycarbonyl derivative of the formula

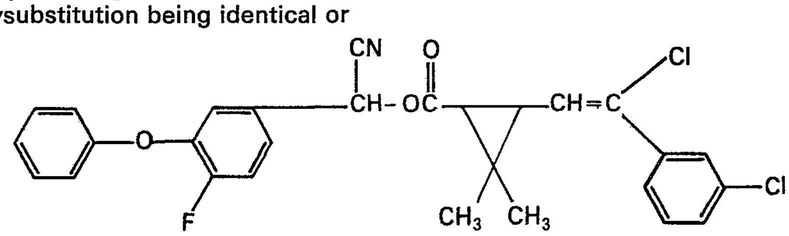

3. Process for the preparation of the substituted phenoxybenzyloxycarbonyl derivatives of the formula (I) according to Claim 1, characterised in that

a) phenoxybenzyl alcohols of the formula (II)

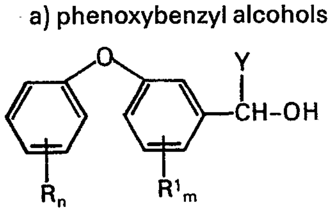

(II)

in which
R, $R^1$, Y, n and m have the abovementioned meaning, are reacted with cyclopropanecarboxylic acid derivatives of the formula

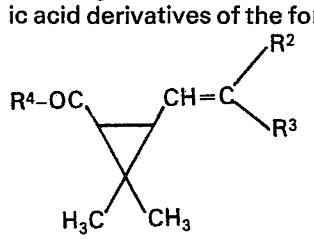

(III)

in which
$R^2$ and $R^3$ have the abovementioned meaning and
$R^4$ represents halogen or $C_{1-4}$-alkoxy, preferably methoxy or ethoxy and
Hal represents halogen, preferably chlorine,
if appropriate in the presence of an acid acceptor and, if appropriate, in the presence of a solvent,
or
b) phenoxybenzyl halides of the formula

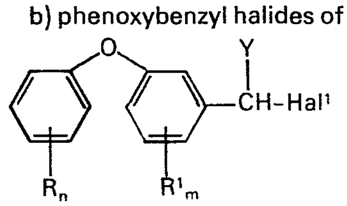

(IV)

in which
R, $R^1$, Y, n and m have the abovementioned meaning and
Hal represents halogen, preferably chlorine or bromine,
are reacted with cyclopropanecarboxylic acid derivatives of the formula

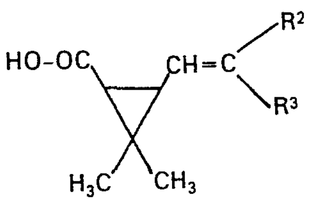

(V)

in which
$R^2$ and $R^3$ have the abovementioned meaning,
if appropriate in the form of the alkali metal salts, alkaline earth metal salts or ammonium salts or, if appropriate, in the presence of an acid acceptor and, if appropriate, in the presence of a solvent.

4. Insecticidal and acaricidal agents, characterised in that they contain substituted phenoxybenzyloxycarbonyl derivatives of the formula (I), according to Claim 1.

5. Use of substituted phenoxybenzyloxycarbonyl derivatives of the formula (I) according to Claim 1 for combating insects and acarina.

6. Process for the preparation of insecticidal and acaricidal agents, characterised in that substituted phenoxybenzyloxycarbonyl derivatives of the formula (I) according to Claim 1 are mixed with extenders and/or surface-active agents.

**Revendications**

1. Dérivés phénoxybenzyloxycarbonylés substitués de formule (I)

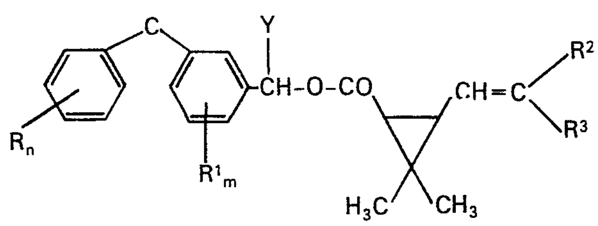

(I)

dans laquelle R, $R^1$ et $R^2$ peuvent être identiques ou différents et représentent l'hydrogène ou un halogène,
$R^3$ représente un groupe phényle ou phénylthio, les noyaux phényle pouvant éventuellement être substitués par un ou plusieurs restes alkyles ou halogènes identiques ou différents,
Y représente l'hydrogène ou le reste nitrile,
n représente un nombre entier de 1 à 5 et
m représente un nombre entier de 1 à 4.

2. Dérivé phénoxybenzyloxycarbonylé substitué de formule

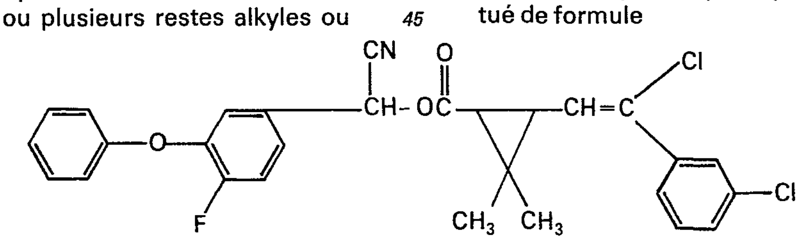

3. Procédé pour la préparation des dérivés phénoxybenzyloxycarbonylés substitués de formule (I) selon la revendication 1, caractérisé en ce que

a) on fait réagir des alcools phénoxybenzyliques de formule

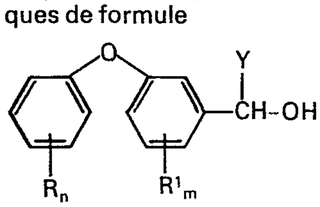

(II)

dans laquelle R, $R^1$, Y, n et m ont la signification indiquée ci-dessus

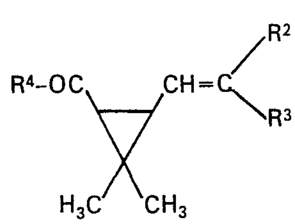

(III)

dans laquelle $R^2$ et $R^3$ ont la signification indiquée

ci-dessus et $R^4$ représente un halogène ou un groupe alcoxy en $C_1$–$C_4$, de préférence méthoxy ou éthoxy,

Hal représente un halogène, de préférence le chlore,

éventuellement en présence d'un accepteur d'acide et éventuellement en présence d'un solvant, ou bien

b) on fait réagir des halogénures de phénoxybenzyle de formule

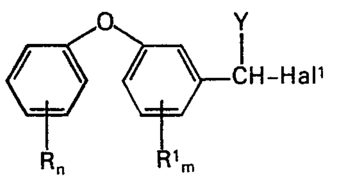

(IV)

dans laquelle R, $R^1$, Y, n et m ont la signification indiquée ci-dessus, et

Hal représente un halogène, de préférence le chlore ou le brome, avec des dérivés d'acide cyclopropanecarboxylique de formule

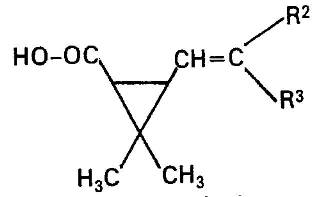

(V)

dans laquelle $R^2$ et $R^3$ ont la signification indiquée ci-dessus, éventuellement sous forme des sels alcalins, alcalino-terreux ou d'ammonium ou éventuellement en présence d'un accepteur d'acide et, éventuellement, en présence d'un solvant.

4. Agents insecticides et acaricides, caractérisés en ce qu'ils contiennent des dérivés phénoxybenzyloxycarbonylés substitués de formule (I) selon la revendication 1.

5. Utilisation de dérivés phénoxybenzyloxycarbonylés substitués de formule (I) selon la revendication 1 pour la lutte contre les insectes et les acariens.

6. Procédé pour la préparation d'agents insecticides et acaricides, caractérisé en ce que l'on mélange des dérivés phénoxybenzyloxycarbonylés substitués de formule (I) selon la revendication 1 avec des agents diluants et/ou des substances tensioactives.